# EUROPEAN PATENT APPLICATION

(11) **EP 4 776 580 A1**
(43) Date of publication of application: **15.07.2026**
(21) Application number: 26150375.9
(22) Date of filing: 06.01.2026
(51) Int. Cl.: H04L 12/40, B60R 16/023, B60W 30/00, B60W 50/00

(54) **SYSTEM AND METHOD FOR SENSOR MANAGEMENT IN A VEHICLE**

(30) Priority: 10.01.2025 US 202519016184
(71) Applicant: Toyota Jidosha Kabushiki Kaisha, Toyota-shi, Aichi-ken 471-8571 (JP)
(72) Inventor: MOMOI, Akiyoshi, Tokyo, 103-0022 (JP); GOTO, Toshio, Tokyo, 103-0022 (JP); TSUKADA, Yoshikazu, Tokyo, 103-0022 (JP); MURAKAMI, Hiroshi, Tokyo, 103-0022 (JP); MASUDA, Yasutomo, Tokyo, 103-0022 (JP); KASAOKI, Seisuke, Tokyo, 103-0022 (JP)
(74) Representative: D Young & Co LLP

(57) **Abstract**

Provided are system, method, and device for automatically managing sensors in a vehicle system. According to example embodiments, the system may include: a first sensor (212); a second sensor (222); a first controller (210) connected to the first sensor (212) and the second sensor (222); and a second controller (220) connected to the first controller (210); wherein the first controller (210) may be configured to utilize data from the first sensor (212) to perform a first operation, wherein the second controller (220) may be configured to utilize data from the second sensor (222) to perform a second operation via the first controller (210), and wherein the second sensor (222) may not be connected to the second controller (220) such that the second controller (220) may receive data from the second sensor (222) via the first controller (210).

## Description

### TECHNICAL FIELD

Example embodiments of the present disclosure relate to a vehicle system, and more specifically, relate to the management of sensors in a vehicle system.

### BACKGROUND

Modern vehicles are capable of performing a wide range of complex functions, such as generating telemetry data, transmitting and receiving data via the Internet, and the like. In order to perform such functions, the vehicles may be comprised of various sensors that measure and obtain data related to the vehicles themselves and their environments, as well as various controllers that perform functions based on data outputted by the sensors.

In the related art, each sensor is directly connected to a controller which the data from such sensor is mainly utilized.

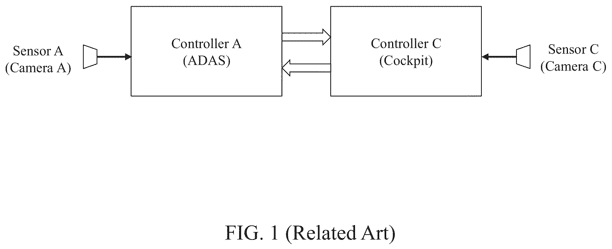

FIG. 1 illustrates an example sensor-controller configuration of a vehicle system in the related art. As shown in FIG. 1, a controller related to Advanced Driver Assistance System (ADAS) (controller A) may be connected to camera sensor A where data from such camera sensor is mainly used by the ADAS controller, while a controller related to the cockpit (controller C) may be connected to a camera sensor C where data from such camera sensor is mainly used by the cockpit controller. Further, in order to ensure that other controllers can access data from sensors that is not currently connected to themselves, a bidirectional connection between the controllers is established to allow the controllers to communicate and exchange data from their respective sensors. For example, as shown in FIG. 1, the ADAS controller and the cockpit controller are bidirectionally connected with each other.

### SUMMARY

Example embodiments consistent with the present disclosure allows for simplification of the configuration of vehicle systems, which improves accuracy, reliability, and efficiency of testing.

According to example embodiments, a system is provided. The system may include: a first sensor; a second sensor; a first controller connected to the first sensor and the second sensor; and a second controller connected to the first controller; wherein the first controller may be configured to utilize data from the first sensor to perform a first operation, wherein the second controller may be configured to utilize data from the second sensor to perform a second operation via the first controller, and wherein the second sensor may not be connected to the second controller such that the second controller may receive data from the second sensor via the first controller.

According to example embodiments, the first controller may be connected to the first sensor and the second sensor such that data from the first sensor and data from the second sensor may be transmitted to the first controller unidirectionally.

According to example embodiments, the second controller may be connected to the first controller such that data from the first controller may be transmitted to the second controller unidirectionally, and wherein the data from the first controller may include the data from the second sensor.

According to example embodiments, the first controller may include a first system on chip (SoC), and wherein the second controller may include a second SoC separated from the first SoC.

According to example embodiments, the first SoC may include a safety-critical SoC, and wherein the second SoC may include a non-safety-critical SoC.

According to example embodiments, the first sensor may include a safety-related sensor, and wherein the second sensor may include a non-safety-related sensor.

According to example embodiments, all sensors in the vehicle system may be connected to the first controller.

According to example embodiments, a method is provided. The method may include: receiving, by a first controller connected to a first sensor and a second sensor, data from the first sensor and data from the second sensor; utilizing, by the first controller, the data from the first sensor to perform a first operation; receiving, by a second controller connected to the first controller, data from the first controller, wherein the data from the first controller may include the data from the second sensor; and utilizing, by the second controller, the data from the second sensor comprised in the data from the first controller to perform a second operation.

According to example embodiments, the first controller may be connected to the first sensor and the second sensor such that data from the first sensor and data from the second sensor may be transmitted to the first controller unidirectionally.

According to example embodiments, the second controller may be connected to the first controller such that data from the first controller may be transmitted to the second controller unidirectionally.

According to example embodiments, the first controller may include a first system on chip (SoC), and wherein the second controller may include a second SoC separated from the first SoC.

According to example embodiments, the first SoC may include a safety-critical SoC, and wherein the second SoC may include a non-safety-critical SoC.

According to example embodiments, the first sensor may include a safety-related sensor, and wherein the second sensor may include a non-safety-related sensor.

According to example embodiments, all sensors in a vehicle system may be connected to the first controller.

According to example embodiments, a non-transitory computer-readable recording medium is provided. The non-transitory computer-readable recording medium may have recorded thereon instructions executable by at least one processor to cause the at least one processor to perform a method including: receiving, by a first controller connected to a first sensor and a second sensor, data from the first sensor and data from the second sensor; utilizing, by the first controller, the data from the first sensor to perform a first operation; receiving, by a second controller connected to the first controller, data from the first controller, wherein the data from the first controller may include the data from the second sensor; and utilizing, by the second controller, the data from the second sensor comprised in the data from the first controller to perform a second operation.

According to example embodiments, the first controller may be connected to the first sensor and the second sensor such that data from the first sensor and data from the second sensor may be transmitted to the first controller unidirectionally.

According to example embodiments, the second controller may be connected to the first controller such that data from the first controller may be transmitted to the second controller unidirectionally.

According to example embodiments, the first controller may include a first system on chip (SoC), and wherein the second controller may include a second SoC separated from the first SoC.

According to example embodiments, the first SoC may include a safety-critical SoC, and wherein the second SoC may include a non-safety-critical SoC.

According to example embodiments, the first sensor may include a safety-related sensor, and wherein the second sensor may include a non-safety-related sensor.

Additional aspects will be set forth in part in the description that follows and, in part, will be apparent from the description, or may be realized by practice of the presented embodiments of the disclosure.

### BRIEF DESCRIPTION OF THE DRAWINGS

Features, advantages, and significance of exemplary embodiments of the disclosure will be described below with reference to the accompanying drawings, in which like reference numerals denote like elements, and wherein:
FIG. 1 illustrates an example sensor-controller configuration of a vehicle system in the related art;
FIG. 2 illustrates a block diagram of an example system configuration for managing sensors in a vehicle, according to one or more example embodiments;
FIG. 3 illustrates a flow diagram of an example method for managing sensors, according to one or more example embodiments; and
FIG. 4 illustrates a block diagram of example components in a system, according to one or more example embodiments;

### DETAILED DESCRIPTION

The following detailed description of exemplary embodiments refers to the accompanying drawings. The foregoing disclosure provides illustration and description but is not intended to be exhaustive or to limit the implementations to the precise form disclosed. Modifications and variations are possible in light of the above disclosure or may be acquired from practice of the implementations. Further, one or more features or components of one embodiment may be incorporated into or combined with another embodiment (or one or more features of another embodiment). Additionally, in the flowcharts and descriptions of operations provided below, it is understood that one or more operations may be omitted, one or more operations may be added, one or more operations may be performed simultaneously (at least in part), and the order of one or more operations may be switched.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Where only one item is intended, the term "one" or similar language is used. Also, as used herein, the terms "has," "have," "having," "include," "including," or the like are intended to be openended terms. Further, the phrase "based on" is intended to mean "based, at least in part, on" unless explicitly stated otherwise. Furthermore, expressions such as "[A] and/or [B]", "at least one of [A] and [B]" or "at least one of [A] or [B]" are to be understood as including only A, only B, or both A and B.

Expressions such as "at least one processor," where configured to implement a plurality of operations, execute a plurality of instructions, etc., are to be understood as a single processor implementing the plurality of operations, etc., or each of plural processors implementing at least some (but not necessarily all) of the plurality of operations, etc.

Reference throughout this specification to "one embodiment," "an embodiment," "non-limiting exemplary embodiment," or similar language means that a particular feature, structure, or characteristic described in connection with the indicated embodiment is included in at least one embodiment of the present solution. Thus, the phrases "in one embodiment", "in an embodiment," "in one non-limiting exemplary embodiment," and similar language throughout this specification may, but do not necessarily, all refer to the same embodiment.

Further, the described features, advantages, and characteristics of the present disclosure may be combined in any suitable manner in one or more example embodiments. One skilled in the relevant art will recognize, in light of the description herein, that the present disclosure can be practiced without one or more of the specific features or advantages of a particular embodiment. In other instances, additional features and advantages may be recognized in certain embodiments that may not be present in all embodiments of the present disclosure.

Furthermore, the term "vehicle" described herein refers to any suitable type of vehicle in which example embodiments of the present disclosure can be implemented. For instance, the "vehicle" may refer to a motorized vehicle such as a car, a truck, a bus, a motorcycle, or any other suitable type of automobile powered by an engine, motor, or other mechanical means. Alternatively or additionally, the "vehicle" described herein may refer to a bicycle, a skateboard, and any other suitable types of non-motorized vehicle, without departing from the scope of the present disclosure.

As described above in relation to FIG. 1, in a vehicle system of the related art, each sensor is directly connected to a controller which the data from such sensor is mainly utilized.

In this regard, since different sensors are connected to different controller and different controller may need to be connected and exchange data between each other, the complexity of the configuration of the system that involves such sensors and controllers may increase as the number of sensors and controllers increase. Such increase in complexity may result in difficulty in testing of such system, which reduces reliability and efficiency.

Accordingly, there is a need for a system that can simplify the design and configuration of the system while ensuring that data from a sensor can be utilized by multiple controllers without increasing the complexity of the design.

It is contemplated that features, advantages, and significances of example embodiments described herein are merely a portion of the present disclosure, and are not intended to be exhaustive or to limit the scope of the present disclosure. Further descriptions of the features, components, configuration, operations, and implementations of the example embodiments of the present disclosure are provided in the following.

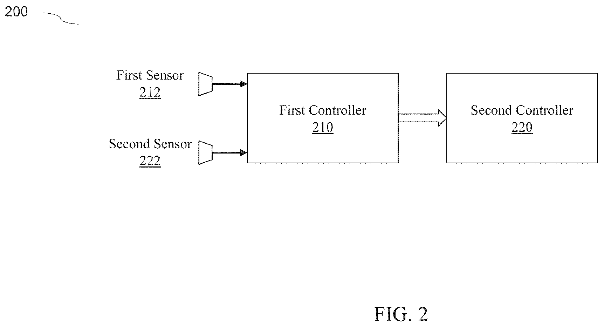

FIG. 2 illustrates a block diagram of an example system configuration 200 for managing sensors in a vehicle, according to one or more example embodiments. As illustrated in FIG. 2, system configuration 200 may include a plurality of controllers (first controller 210 and second controllers 220) and a plurality of sensors (first sensor 212 and second sensor 222). According to example embodiments, the system configuration 200 may be comprised in a vehicle (vehicle system).

The first controller 210 may include a processor, a system on chip (SoC), an electronic control unit, and the like. According to example embodiments, the first controller 210 may be configured to utilize data from the first sensor 212 to perform a first operation. The first operation may include an operation related to safety of the vehicle. According to example embodiments, the first controller 210 may be a first SoC, where the first SoC may include a safety-critical SoC. Here, the safety-critical SoC may include an SoC that is configured to perform an operation related to safety of a vehicle (i.e., first operation). For example, the safety-critical SoC may include an SoC configured to perform operations related to Advanced Driver Assistance System (ADAS), Driver Monitoring System (DMS), and the like.

The second controller 220 may include a processor, a system on chip (SoC), an electronic control unit, and the like. According to example embodiments, the second controller 220 may be configured to utilize data from the second sensor 222 to perform a second operation via the first controller 210. The second operation may include an operation not related to safety of the vehicle. According to example embodiments, the second controller 220 may be a second SoC, where the second SoC may include a non-safety-critical SoC. Here, the non-safety-critical SoC may include an SoC that is configured to perform an operation (any kind of operation) not related to safety of a vehicle (i.e., second operation). For example, the non-safety-critical SoC may include an SoC configured to perform operations related to cockpit, user experience (UX)/Human Machine Interface (HMI), and the like.

According to example embodiments, the second controller 220 and the first controller 210 may be separated from each other.

The first sensor 212 may include a sensor whose data is mainly utilized by the first controller 210. According to example embodiments, the first sensor 212 may include a safety-related sensor, where data from such safety-related sensor is mainly utilized by the safety-critical SoC (i.e., the first controller 210). For example, the first sensor 212 may include an in-cabin camera where its data is to be utilized by the DMS SoC to monitor the driver of the vehicle. In another example, the first sensor 212 may include a radar/lidar or an out-car camera where its data is to be utilized by the ADAS SoC for data collection purposes, image signal processing (ISP), artificial intelligence (AI) processing, and the like.

The second sensor 222 may include a sensor whose data is mainly utilized by the second controller 220. According to example embodiments, the second sensor 222 may include a non-safety-related sensor, where data from such non-safety-related sensor is mainly utilized by the non-safety-critical SoC (i.e., the second controller 220). For example, the second sensor 222 may include an in-cabin camera or a microphone where its data is to be utilized by the UX/HMI SoC for gesture recognition, image processing for display, audio processing, and the like.

In this regard, as further shown in FIG. 2, the first controller 210 may be connected to the first sensor 212 and the second sensor 222, while the second controller 220 may be connected to the first controller 210.

In particular, the first controller 210 may be connected to the first sensor 212 and the second sensor 222 such that data from the first sensor 212 and data from the second sensor 222 are transmitted to the first controller unidirectionally.

According to example embodiments, the first controller 210 may be configured such that data from the first sensor 212 and data from the second sensor 222 are transmitted to the first controller unidirectionally. For example, the first controller 210 may be configured with an interface that only allows data to be transmitted in the direction from the first and second sensors 212,222 to the first controller 210. In another example, the first controller 210 may be configured with a protocol that only allows data to be transmitted in the direction from the first and second sensors 212,222 to the first controller 210. In further another example, the first controller 210 may be physically configured with components, configurations, designs, and the like that only allow data to be transmitted in the direction from the first and second sensors 212,222 to the first controller 210. It is understood that the use of the expression "only" above is an example to limit the direction which data is being transmitted, and is not intended to limit the scope of the present disclosure in any other way.

It is understood that data from the first sensor 212 and data from the second sensor 222 may include any kind of measurement data outputted by said sensors. For example, if the second sensor 222 corresponds to a temperature sensor, the data from the second sensor 222 may include data associated with temperature measurements obtained and outputted by the second sensor 222 (temperature sensor).

The second controller 220 may be connected to the first controller 210 such that data from the first controller 210 is transmitted to the second controller 220 unidirectionally, where the data from the first controller 210 may include the data from the second sensor 222 (e.g., sensor data/measurements). In other words, the second controller 220 may be connected to the first controller 210 such that data from the second sensor 222 is transmitted to the second controller 220 unidirectionally via the first controller 210.

According to example embodiments, the second controller 220 may be configured such that data from the first controller 210 is transmitted to the second controller 220 unidirectionally. For example, the second controller 220 may be configured with an interface that only allows data to be transmitted in the direction from the first controller 210 to the second controller 220. In another example, the second controller 220 may be configured with a protocol that only allows data to be transmitted in the direction from the first controller 210 to the second controller 220. In further another example, the second controller 220 may be physically configured with components, configurations, designs, and the like that only allow data to be transmitted in the direction from the first controller 210 to the second controller 220. It is understood that the use of the expression "only" above is an example to limit the direction which data is being transmitted, and is not intended to limit the scope of the present disclosure in any other way.

It is understood that data from the first controller 210 may include any other kind of data. For example, the data from the first controller 210 may also include the data from the first sensor 212, processing data required by the second controller 220, communication data, and the like.

According to example embodiments, the second sensor 222 may not be connected to the second controller 220 such that the second controller 220 receives data from the second sensor 222 via the first controller 210. In other words, the second controller 220 receives data from the second sensor 222 indirectly via the first controller 210, rather than directly from the second sensor 222.

According to example embodiments, the second sensor 222 may also be connected to the second controller 220 such that the second controller 220 receives data from the second sensor 222 indirectly via the first controller 210 or directly from the second sensor 222.

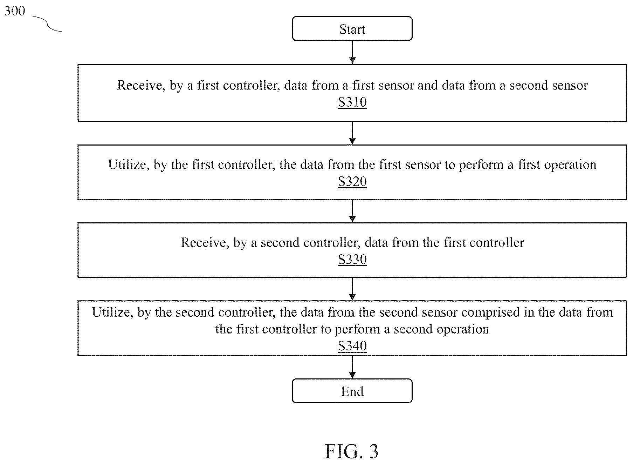

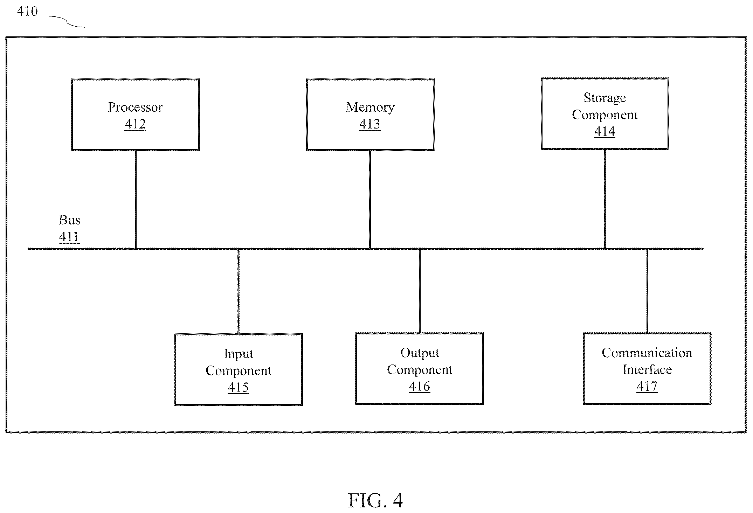

Example operations performable by the first controller 210 and the second controller 220 for managing sensors are described below with reference to FIG. 3. Further, several example components which may be included in the first controller 210 and the second controller 220, according to one or more example embodiments, are described below with reference to FIG. 4.

It is contemplated that the system configuration may include more/fewer components than illustrated, and/or may be configured in a different manner, without departing from the scope of the present disclosure. For instance, in some implementations, the system configuration may include more than two controllers and/or more than two sensors.

In this regard, according to example embodiments, all sensors within the system (vehicle) may be connected to the first controller 210. For example, all sensors within the vehicle may be connected to the first controller 210, without being connected to the controllers that mainly utilize the data from such sensors in the similar manner as the second sensor 222. Accordingly, the first controller 210 may be connected to said controllers that mainly utilize the data from such sensors either directly in the similar manner as the second controller 220 or indirectly via other controllers.

In view of the above, the flow of data from sensors to controllers can be performed unidirectionally throughout the vehicle. In this regard, since multiple sensors can simply be connected to one controller (i.e., first controller 210), where such controller can then connects and forwards data from said multiple sensors to other controllers unidirectionally, the configuration and design of the system can be simplified.

Further, since one controller can act as the center point for receiving data from multiple sensors, such data can easily be forwarded to any controllers which the one controller is connected to without increasing the complexity of the design (e.g., adding bidirectional communication). For example, the first controller 210 can utilize the data from the second sensor 222, without having to incorporate bidirection communication with the second controller 220 in order to obtain such data.

Furthermore, if the same processing result of a sensor is required for two controllers, such processing can be performed only once in one controller and then simply be forwarded to another controller. For example, if a perception (processing) result from the same sensor data is required for two controllers, then such perception may be processed with an AI accelerator in one controller and then simply be forwarded to another controller. This can eliminate redundant processing operations, thereby reducing overall processing requirements, data transfer size between controllers, and power consumption, as well as improving efficiency.

Further still, it is understood that the first controller 210 and the second controller 220 may be associated with various performance requirements. For example, the first controller 210 may have a high safety requirement, high real time processing requirement, and low evolution speed requirement, while the second controller 220 may have a low safety requirement, low real time processing requirement, and high evolution speed requirement. In this regard, it is possible for data from the first/second sensors 212,222 to benefit from requirements of the first controller 210. For example, since the first controller 210 has a high real time processing requirement, the data from the second sensor 222 (which is to be utilized by the second controller 220 with low real time processing requirement) can benefit from the high real time processing requirement of the first controller 210.

In view of the above, example embodiments allow for simplification of the configuration of vehicle systems, which improves accuracy, reliability, and efficiency of testing.

FIG. 3 illustrates a flow diagram of an example method 300 for managing sensors, according to one or more example embodiments. One or more operations in method 300 may be performed by at least one processor (processor 412) of a first controller and/or a second controller.

As illustrated in FIG. 3, at operation S310, the at least one processor may be configured to receive data from a first sensor and data from a second sensor. The data may be received by a first controller connected to the first sensor and the second sensor. According to example embodiments, the first controller may be connected to the first sensor and the second sensor such that data from the first sensor and data from the second sensor are transmitted to the first controller unidirectionally.

According to example embodiments, the first controller may include a first system on chip (SoC). The first SoC may include a safety-critical SoC. Further, the first sensor may include a safety-related sensor, and the second sensor may include a non-safety-related sensor.

According to example embodiments, all sensors in a vehicle system may be connected to the first controller. The method then proceeds to operation S320.

At operation S320, the at least one processor may be configured to utilize the data from the first sensor to perform a first operation. The data may be utilized by the first controller. The method then proceeds to operation S330.

At operation S330, the at least one processor may be configured to receive data from the first controller. The data may be received by a second controller connected to the first controller. According to example embodiments, the data from the first controller may include the data from the second sensor. According to example embodiments, the second controller may be connected to the first controller such that data from the first controller is transmitted to the second controller unidirectionally.

According to example embodiments, the second controller may include a second system on chip (SoC) separated from the first SoC. The second SoC may include a non-safety-critical SoC.

It is understood that the first controller may be configured to transmit the data including the data from the second sensor to the second controller before operation S330. The method then proceeds to operation S340.

At operation S340, the at least one processor may be configured to utilize the data from the second sensor comprised in the data from the first controller to perform a second operation. The data may be utilized by the second controller.

Upon performing operation S340, the method 300 may be ended or be terminated. Alternatively, method 300 may return to operation S310, such that the at least one processor may be configured to repeatedly perform, for at least a predetermined amount of time, the receiving the data from the first sensor and the second sensor (at operation S310), the utilizing the data from the first sensor (at operation S320), the receiving the data from the first controller (at operation S330), and/or the utilizing the data from the second sensor (at operation S340).

FIG. 4 illustrates a block diagram of example components in a system 410, according to one or more example embodiments. The system 410 may correspond to the first controller and/or the second controller described above in relation to FIG. 2, thus the features associated with the first and second controllers and the system 410 may be similarly applicable to each other, unless being explicitly described otherwise.

As illustrated in FIG. 4, the system 410 may include at least one bus 411, at least one processor 412, at least one memory 413, at least one storage component 414, at least one input component 415, at least one output component 416, and at least one communication interface 417.

It is contemplated that the system 410 may include more or less components than illustrated in FIG. 4, without departing from the scope of the present disclosure. For instance, in some embodiments, the system 410 may include a plurality of storage components 414, the input component 415 and the output component 416 may be implemented as a transceiver component, the memory 413 and storage component 414 may be implemented as a memory storage, and the like.

The bus 411 may be configured to facilitate or enable communications among the components of the system 410. Specifically, the bus 411 may communicatively couple the components to each other and provide a means for data transfer and flow of control signals between the components. The bus 411 may include one or more of: an internal bus, an address bus, a data bus, a control bus, a controller area network (CAN) bus, an Ethernet bus, a peripheral component interconnect express (PCIe) bus, and any other suitable type of bus that can be implemented in the system 410 to enable communication and coordination between the components within the system 410 in real-time (or near real-time).

The processor 412 may be implemented in hardware, firmware, or a combination of hardware and software, and may be configured to handle real-time (or near real-time) data processing and control of the control system 410. The processor 412 may include one or more of: a central processing unit (CPU), a graphics processing unit (GPU), a neural processing unit (NPU), a tensor processing unit (TPU), an accelerated processing unit (APU), a microprocessor, a microcontroller, a digital signal processor (DSP), a field-programmable gate array (FPGA), an application-specific integrated circuit (ASIC), and/or another type of processing or computing component that can be implemented in the system 410. In some implementations, the processor 412 may be capable of being programmed to perform one or more operations described herein. Further, the processor 412 may include a plurality of processing units, each of which is dedicated to performing a specific operation.

The memory 413 may include one or more mediums for storing temporary data, runtime variables, program instructions, and buffers required for the operations of the control system 410. The memory 413 may include one or more of: a flash memory, a read-only memory (ROM), a random-access memory (RAM), a dynamic or static storage device (e.g., a flash memory, a magnetic memory, and/or an optical memory), any other suitable type of memory that can be implemented in the system 410 to store information and/or instructions for use by the processor 412.

The storage component 414 may be configured to store non-volatile data, such as firmware, configuration settings, calibration data, information, and/or software related to the operation and use of the system 410. For example, the storage component 414 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive.

According to example embodiments, the storage component 414 may be configured to store computer-readable or computer-executable instructions for implementing one or more operations of the system 410. The storage component 414 may provide the stored information to the memory 413 for the execution of the processor 412.

The input component 415 may include one or more input components that permit the system 410 to receive information, such as via user input (e.g., a touch screen display, a keyboard, a keypad, a mouse, a button, a switch, and/or a microphone). The output component 416 may include one or more output components that provide output information from the system 410 (e.g., a display, a speaker, a navigation device, one or more light-emitting diodes (LEDs), etc.) According to example embodiments, the input component 415 and/or the output component 416 may be optional and may be excluded from the system 410.

The at least one communication interface 417 may include a transceiver-like component (e.g., a transceiver and/or a separate receiver and transmitter) that enables the system 410 to communicate with other components (e.g., ECUs, user devices, etc.), such as via a wired connection, a wireless connection, or a combination of wired and wireless connections. For example, communication interface 417 may include a controller area network (CAN) bus interface, an Ethernet interface, an optical interface, a coaxial interface, an infrared interface, a radio frequency (RF) interface, a universal serial bus (USB) interface, a Wi-Fi interface, a cellular network interface, or the like.

According to one or more example embodiments, the communication interface 417 may include at least one input/output (I/O) interface, at least one network interface, at least one storage interface, or the like, that enable the components 412-416 to communicate with other components. Further, the communication interface 417 may include one or more application programming interfaces (APIs) that allow the system 410 (or one or more components included therein) to communicate with one or more software applications (e.g., software application deployed in the ECUs, etc.)

Computer-executable instructions (e.g., software instructions, etc.) may be read into memory 413 and/or storage component 414 from another computer-readable medium or from another device (e.g., a remote server, an external storage, etc.) via, for example, the communication interface 417. When executed, the computer-executable instructions stored in memory 413 and/or storage component 414 may cause the processor 412 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

It is contemplated that features, advantages, and significances of example embodiments described hereinabove are merely a portion of the present disclosure, and are not intended to be exhaustive or to limit the scope of the present disclosure. Further descriptions of the features, components, configuration, operations, and implementations of example embodiments of the present disclosure, as well as the associated technical advantages and significances, are provided in the following.

It is understood that the specific order or hierarchy of blocks in the processes/ flowcharts disclosed herein is an illustration of example approaches. Based upon design preferences, it is understood that the specific order or hierarchy of blocks in the processes/ flowcharts may be rearranged. Further, some blocks may be combined or omitted. The accompanying method claims present elements of the various blocks in a sample order, and are not meant to be limited to the specific order or hierarchy presented.

Some embodiments may relate to a system, a method, and/or a computer-readable medium at any possible technical detail level of integration. Further, as described hereinabove, one or more of the above components described above may be implemented as instructions stored on a computer readable medium and executable by at least one processor (and/or may include at least one processor ). The computer-readable medium may include a computer-readable non-transitory storage medium (or media) having computer-readable program instructions thereon for causing a processor (or processors) to carry out operations.

The computer readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program code/instructions for carrying out operations may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object-oriented programming languages such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects or operations.

These computer readable program instructions may be provided to a processor of a SoC, a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or another device to cause a series of operational steps to be performed on the computer, other programmable apparatus or other device to produce a computer-implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer-readable media according to various embodiments. In this regard, each block in the flowchart or block diagrams may represent a module, segment, or portion of instructions, which comprises one or more executable instructions for implementing the specified logical function(s). The method, computer system, and computer-readable medium may include additional blocks, fewer blocks, different blocks, or differently arranged blocks than those depicted in the Figures. In some alternative implementations, the functions noted in the blocks may occur out of the order noted in the Figures. For example, two blocks shown in succession may, in fact, be executed concurrently or substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware may be designed to implement the systems and/or methods based on the description herein.

## Claims

1. A vehicle system comprising:
a first sensor (212);
a second sensor (222);
a first controller (210) connected to the first sensor (212) and the second sensor (222); and
a second controller (220) connected to the first controller (210),
wherein the first controller (210) is configured to utilize data from the first sensor (212) to perform a first operation,
wherein the second controller (220) is configured to utilize data from the second sensor (222) to perform a second operation via the first controller (210), and
wherein the second sensor (222) is not connected to the second controller (220) such that the second controller (220) receives data from the second sensor (222) via the first controller (210).

2. The system as claimed in claim 1, wherein the first controller (210) is connected to the first sensor (212) and the second sensor (222) such that data from the first sensor (212) and data from the second sensor (222) are transmitted to the first controller (210) unidirectionally.

3. The system as claimed in claim 2, wherein the second controller (220) is connected to the first controller (210) such that data from the first controller (210) is transmitted to the second controller (220) unidirectionally, and wherein the data from the first controller (210) comprises the data from the second sensor (222).

4. The system as claimed in any one of claims 1 to 3, wherein the first controller (210) comprises a first system on chip (SoC), and wherein the second controller (220) comprises a second SoC separated from the first SoC.

5. The system as claimed in claim 4, wherein the first SoC comprises a safety-critical SoC, and wherein the second SoC comprises a non-safety-critical SoC.

6. The system as claimed in any one of claims 1 to 5, wherein the first sensor (212) comprises a safety-related sensor, and wherein the second sensor (222) comprises a non-safety-related sensor.

7. The system as claimed in any one of claims 1 to 6, wherein all sensors in the vehicle system is connected to the first controller (210).

8. A method comprising:
receiving, by a first controller (210) connected to a first sensor (212) and a second sensor (222), data from the first sensor (212) and data from the second sensor (222);
utilizing, by the first controller (210), the data from the first sensor (212) to perform a first operation;
receiving, by a second controller (220) connected to the first controller (210), data from the first controller (210), wherein the data from the first controller (210) comprises the data from the second sensor (222); and
utilizing, by the second controller (220), the data from the second sensor (222) comprised in the data from the first controller (210) to perform a second operation.

9. The method as claimed in claim 8, wherein the first controller (210) is connected to the first sensor (212) and the second sensor (222) such that data from the first sensor (212) and data from the second sensor (222) are transmitted to the first controller (210) unidirectionally.

10. The method as claimed in claim 9, wherein the second controller (220) is connected to the first controller (210) such that data from the first controller (210) is transmitted to the second controller (220) unidirectionally.

11. The method as claimed in any one of claims 8 to 10, wherein the first controller (210) comprises a first system on chip (SoC), and wherein the second controller (220) comprises a second SoC separated from the first SoC.

12. The method as claimed in claim 11, wherein the first SoC comprises a safety-critical SoC, and wherein the second SoC comprises a non-safety-critical SoC.

13. The method as claimed in any one of claims 8 to 12, wherein the first sensor (212) comprises a safety-related sensor, and wherein the second sensor (222) comprises a non-safety-related sensor.

14. The method as claimed in any one of claims 8 to 13, wherein all sensors in a vehicle system is connected to the first controller (210).

15. A computer program including instructions executable by at least one processor (412) to cause the at least one processor (412) to perform a method comprising:
receiving, by a first controller (210) connected to a first sensor (212) and a second sensor (222), data from the first sensor (212) and data from the second sensor (222);
utilizing, by the first controller (210), the data from the first sensor (212) to perform a first operation;
receiving, by a second controller (220) connected to the first controller (210), data from the first controller (210), wherein the data from the first controller (210) comprises the data from the second sensor (222); and
utilizing, by the second controller (220), the data from the second sensor (222) comprised in the data from the first controller (210) to perform a second operation.
